# EUROPEAN PATENT APPLICATION

(11) **EP 3 012 300 A1**
(43) Date of publication of application: **27.04.2016**
(21) Application number: 14813105.5
(22) Date of filing: 16.06.2014
(51) Int. Cl.: C09D 133/00, B32B 27/30, B32B 27/40, B41M 7/02, C09D 5/02, C09D 7/12, C09D 11/00, C09D 175/04

(54) **SURFACE PROTECTION LAYER COMPOSITION, AND DECORATIVE BODY USING SAME**

(30) Priority: 20.06.2013 JP 2013129259
(71) Applicant: DNP Fine Chemicals Co., Ltd., Yokohama-shi, Kanagawa 226-0022 (JP)
(72) Inventor: FURUTAKA, Toshio, Yokohama-shi Kanagawa 226-0022 (JP); MORIYAMA, Gaku, Yokohama-shi Kanagawa 226-0022 (JP); SAITO, Yasuma, Yokohama-shi Kanagawa 226-0022 (JP)
(74) Representative: Winter, Brandl, Fürniss, Hübner, Röss, Kaiser, Polte - Partnerschaft mbB
(86) International application number: PCT/JP2014/065887
(87) International publication number: WO 2014/203853

(57) **Abstract**

Provided are: a surface protection layer composition having excellent damage resistance, and followability with respect to expansion and contraction of an elastic base material; and a decorative body using the same. This surface protection layer composition includes a silicone-modified (meth)acrylate-based resin having a glass transition point (Tg) of 0°C or less, and a carbonate-modified urethane resin. The surface protection layer composition is used to configure a surface protection layer for protecting: an elastomer base material, or a base material having a Young's modulus of 0.001MPa to -30MPa inclusive; and the surface of the decorative layer which is a cured film of an ink composition formed on the base material. Thus, adhesion to the decorative layer is excellent, and with respect to expansion and contraction of the base material, followability, and damage resistance, and the like, are excellent.

## Description

### TECHNICAL FIELD

The present invention relates to a surface protection layer composition to configure a surface protection layer formed on a decorative layer provided on a surface of a base material, and a decorative body using the same.

### BACKGROUND ART

Hitherto, the development of an active-energy-ray-curable ink composition cured by ultraviolet rays, electron beams, and other active energy rays has been performed. The active-energy-ray-curable ink composition is rapidly dryable. Therefore, even when printing or decorating is performed on a base material which does not, or almost does not, absorb ink, such as plastic, glass, or coated paper, bleeding of ink can be prevented. The active-energy-ray-curable ink composition includes a polymerizable monomer, a polymerization initiator, a pigment, other additives, and the like.

In recent years, it has been required to form a decorative layer, such as printing or a design, on a base material to obtain a decorative body, not only when the base material is plastic, glass, coated paper, or the like, but also when the base material is a flexible material, such as a polyethylene terephthalate resin, a vinyl chloride resin, or rubber. In this case, the decorative body is required to have an elongation of 100% or more without causing cracking or peeling, even if the decorative body is stretched, and to possess durability at that elongation. A surface protection layer is formed on the decorative layer in order to protect a surface thereof.

As an example of the active-energy-ray-curable ink composition to configure the decorative layer, a composition including (A) 20-65% by mass inclusive among reaction components of an acrylate monomer which gives a homopolymer having a glass transition point of 0°C or less, (B) a monofunctional acrylate having an alicyclic structure, and (C) a polyfunctional acrylate having an alicyclic structure has been proposed (see Patent Document 1).

The decorative body obtained by printing or decorating this ink composition on a polyethylene terephthalate resin or a vinyl chloride resin has excellent flexibility, elongation durability, scratch resistance, and weather resistance. The decorative body has durability in elongation even if the decorative body is stretched and affixed to articles having curved surfaces, such as vehicle bodies. Therefore, the decorative body does not cause cracking or peeling.

Patent Document 1: Japanese Unexamined Patent Application, Publication No. 2011-162703

### DISCLOSURE OF THE INVENTION

### Problems to be Solved by the Invention

However, when a surface protection layer is formed on the decorative layer, the surface protection layer is also required to have durability in elongation like the decorative layer. When the decorative layer is a cured film of an ink composition, it is particularly hard to obtain adhesion to the decorative layer. Also in view of this point, it is necessary to further improve the protection layer.

The present invention has been achieved in view of the above-described circumstances. An object thereof is to provide a surface protection layer composition having excellent adhesion to a decorative layer, excellent followability with respect to expansion and contraction of a base material, and excellent damage resistance, and a decorative body using the same.

### Means for Solving the Problems

The present inventors made intensive studies in order to solve the above-described problems. As a result, the present inventors have found that it is possible to form a surface protection layer followable to deformation of a base material by using a cured film of a surface protection layer composition including a silicone-modified (meth)acrylate resin having a glass transition point (Tg) of 0°C or less and a carbonate-modified urethane resin, and have completed the present invention. Specifically, the present invention provides the following.
(1) The present invention provides a surface protection layer composition to configure a surface protection layer for protecting an elastomer base material or a base material having a Young's modulus of 0.001MPa to 30MPa inclusive, and a surface of a decorative layer which is a cured film of an ink composition formed on the base material, and including a silicone-modified (meth)acrylate resin having a glass transition point (Tg) of 0°C or less and a carbonate-modified urethane resin.
(2) The present invention provides the surface protection layer composition according to (1), in which the ink composition is an active-energy-ray-curable ink composition.
(3) The present invention provides the surface protection layer composition according to (1) or (2), in which a mass ratio of the silicone-modified (meth)acrylate resin/the carbonate-modified urethane resin is from 95/5 to 10/90.
(4) The present invention provides the surface protection layer composition according to any one of (1) to (3), in which the glass transition point (Tg) of the silicone-modified (meth)acrylate resin is -20°C or less.
(5) The present invention provides the surface protection layer composition according to any one of (1) to (4), including the carbonate-modified urethane resin having a Tg of -20°C or less.
(6) The present invention provides the surface protection layer composition according to any one of (1) to (5), in which the surface protection layer further includes a hydrazide.
(7) The present invention provides the surface protection layer composition according to any one of (1) to (6), in which the surface protection layer composition is an aqueous emulsion and an average particle size of the silicone-modified (meth)acrylate resin is 500nm or less.
(8) The present invention provides a decorative body including an elastomer base material or a base material having a Young's modulus of 0.001MPa to 30MPa inclusive,
   a decorative layer which is a cured film of an ink composition formed on the base material, and
   a surface protection layer formed on the decorative layer,
   in which the surface protection layer is a cured film of the surface protection layer composition according to any one of (1) to (7).
(9) The present invention provides the decorative body according to (8), in which the ink composition includes phenoxy(poly)alkylene glycol (meth)acrylate optionally containing a substituent in a benzene ring.
(10) The present invention provides an ink set of an ink for a decorative layer and an ink for a surface protection layer for forming a decorative layer and a surface protection layer on an elastomer base material or a base material having a Young's modulus of 0.001MPa to 30MPa inclusive,
   in which the ink for a decorative layer is an ink composition, and
   the ink for a surface protection layer is the surface protection layer composition according to any one of (1) to (7).

### Effects of the Invention

According to the present invention, it is possible to provide a surface protection layer composition having excellent adhesion to a decorative layer, excellent followability with respect to expansion and contraction of a base material, and excellent damage resistance, and a decorative body using the same.

### PREFERRED MODE FOR CARRYING OUT THE INVENTION

Hereinafter, specific embodiments of the present invention will be described in detail. However, the present invention is not limited in any way to the following embodiments, and can be performed by applying appropriate modifications within the intended scope of the present invention.

### Decorative body

In the decorative body of the present invention, a decorative layer, which is a cured film of an ink composition, is formed on a part or the whole of a surface of an elastic base material. A surface protection layer is formed on the decorative layer.

In the present invention, the decorative layer is formed at least on a part of the base material, and the surface protection layer may be formed from the decorative layer over the surface of the base material. In this embodiment, the surface protection layer is formed on the decorative layer and on the surface of the base material. The surface protection layer in the present invention can exhibit the above-described adhesion and followability both on the decorative layer and on the surface of the base material.

### Base material

The base material in the present invention may be any material as long as the material is an elastomer base material or a base material having a Young's modulus of 0.001 MPa to 30 MPa inclusive. The base material may be conventionally known natural rubber or synthetic rubber.

The elastomer base material includes a thermoplastic elastomer (hereinafter, also referred to as "TPE"). TPE is a polymer material which is plasticized and can be subjected to injection molding or processing like plastics at a high temperature, and exhibits properties of a rubber elastomer at a normal temperature.

A TPE molecule may be a block polymer type in which a hard segment (plastic component) and a soft segment (elastic component) are chemically bonded to each other in a single polymer, or a blend type in which the hard segment and the soft segment are physically blended. Examples of the TPE molecule include a styrene-based molecule, an olefin-based molecule, and a polyurethane-based molecule.

Examples of the styrene-based molecule include SBS (styrene-butadiene-styrene block copolymer), SEBS (styrene-ethylene-butylene-styrene block copolymer), and SEPS (styrene-ethylene-propylene-styrene block copolymer). Examples of the olefin-based molecule include TPO (thermoplastic olefin) in which ethylene-propylene rubber is finely dispersed in polypropylene. Examples of the polyurethane-based molecule include thermoplastic polyurethane (hereinafter, also referred to as "TPU").

The present invention is characterized in being sufficiently followable to elongation even of the above-described base material and being able to suppress cracking or peeling of a cured film formed as a surface protection layer thereof even if the base material has been subjected to expansion and contraction repeatedly.

### Decorative layer

The decorative layer may be printed by any method, such as an inkjet method, a spray method, or a brush coating method. However, the inkjet method is preferable in view of enhancing a degree of freedom of decorating.

The ink composition to configure the decorative layer is an ink composition including a coloring material, and may be an active-energy-ray-curable ink composition, an aqueous ink composition, or an oily ink composition. The cured film in the present invention is only required to be a film finally obtained by curing or drying, and includes not only a cured film of the above-described active-energy-ray-curable ink composition but also a dry film obtained by evaporating water or a solvent from the above-described aqueous ink composition or oily ink composition.

A conventionally known aqueous ink can be used as the aqueous ink composition without any particular limitation. Examples thereof include an ink (aqueous dye ink) obtained by diffusing a water-soluble dye in water or in a binder resin and a mixed solvent of water and a hydrophilic solvent, such as an alcohol, and an ink (aqueous pigment ink) obtained by diffusing an organic pigment and/or an inorganic pigment therein.

A conventionally known oily ink can be used as the oily ink composition without any particular limitation. The conventionally known oily ink is obtained by dissolving an oil-soluble dye in a binder resin and a solvent, such as toluene, xylene, ethyl acetate, or MEK, or by diffusing an organic pigment and/or an inorganic pigment therein.

In the present invention, the active-energy-ray-curable ink composition is preferable as the ink composition. By using the active-energy-ray-curable ink composition, the following effects are obtained, for example. (i) When printing is performed on a base material, appropriate coating on the base material can be performed due to low surface tension of the ink composition. (ii) When printing is performed on the base material, the time for drying the ink composition can be reduced due to the active-energy-ray-curable ink composition.

(iii) The reduction in drying time can prevent a plurality of kinds of ink compositions having different colors from being mixed on the base material to form a clear image on a surface of the base material. (iv) When printing is performed on the base material, the ink composition does not swell the base material.

### [Active-energy-ray-curable ink composition]

### [Coloring material]

A dye type coloring material or a pigment type coloring material can be used as the coloring material. However, the pigment type coloring material is preferably used. The pigment may be any inorganic pigment or organic pigment usually used in a conventional oily ink composition. Examples thereof include carbon black, cadmium red, molybdenum red, chrome yellow, cadmium yellow, titanium yellow, titanium oxide, chromium oxide, viridian, Titanium Cobalt Green, Ultramarine Blue, Prussian Blue, Cobalt Blue, diketopyrrolopyrrole, anthraquinone, benzimidazolone, anthrapyrimidine, azo-based pigments, phthalocyanine-based pigments, quinacridone-based pigments, isoindolinone-based pigments, dioxazine-based pigments, threne-based pigments, perylene-based pigments, perinone-based pigments, thioindigo-based pigments, quinophthalone-based pigments, metal complex pigments, aluminum paste, silica, calcium carbonate, magnesium carbonate, clay, precipitated barium sulfate, and pearl pigment.

A preferable dispersed particle size of the pigment of the active-energy-ray-curable ink composition is preferably from 10nm to 300nm inclusive as a volume average particle size according to a laser scattering method. By using the pigment having a volume average particle size of 10nm to 300nm inclusive, it is possible to maintain light resistance and to stabilize dispersion. When precipitation of the pigment occurs or an inkjet ink is ejected by an inkjet recording apparatus, it is possible to further reduce a possibility of causing head clogging or ejection bending. Therefore, it is possible to obtain a more preferable cured ink.

In the present invention, when a pigment is used, the content thereof may be appropriately adjusted. The content may depend on the kind of the pigment, but from the viewpoint of achieving a balance between dispersibility and coloring power, the content of the pigment in the total amount of the ink composition is preferably from 0.1 to 20% by mass, and more preferably from 0.2 to 10% by mass, in the case of an organic pigment. From the viewpoint of achieving a balance between dispersibility and coloring power, the content is preferably from 1 to 40% by mass, and more preferably from 5 to 20% by mass, in the case of an inorganic pigment.

### [Viscosity]

The viscosity of the active-energy-ray-curable ink composition is preferably from 5mPa·s to 20 mPa·s inclusive, and more preferably from 5 to 15 mPa·s inclusive, at 40°C. By using the ink composition having a viscosity of 5mPa·s to 15mPa·s inclusive, when the ink composition is ejected using an inkjet apparatus, even when a mechanism for decreasing the viscosity by heating is incorporated in the head of the inkjet apparatus, preferable ejectability can be maintained without causing ejection failure caused by dot omission. Therefore, it is possible to obtain a more preferable active-energy-ray-curable ink composition. Here, ejectability means that dot omission of the ink occurs during continuous printing, or disturbance in ejection, or the like occurs, and therefore printing cannot be performed normally.

The surface tension of the active-energy-ray-curable ink composition of the present invention at 40°C is preferably from 20mN/m to 40 mN/m from the viewpoint of inkjet ejectability and ejection stability.

### [Composition]

In order to enhance followability with respect to the base material, the active-energy-ray-curable ink composition preferably includes an active-energy-ray-polymerizable monomer and an active-energy-ray- polymerization initiator, if necessary. The active-energy-ray-polymerizable monomer preferably includes a monomer A) (a monofunctional monomer having a glass transition point of -30°C or less) and a monomer B) (polyfunctional monomer having a glass transition point of 0°C or less). In addition to the monomers A) and B), the active-energy-ray-curable ink composition more preferably includes a monomer C) (a monofunctional monomer having an alicyclic structure having a glass transition point of from 0°C to 110°C inclusive).

Here, the term "active-energy-ray-polymerizable monomer" refers to a polymerizable monomer having one or more ethylenically unsaturated double bonds.

### [Monomer A): monofunctional monomer having a glass transition point of -30°C or less)]

The active-energy-ray-polymerizable monofunctional monomer includes a monomer A): active-energy-ray-polymerizable monofunctional monomer which has an ethylenically unsaturated double bond and gives a homopolymer having a glass transition point (Tg) of lower than -30°C (hereinafter, also referred to as "monomer A)"). The monomer A) can increase flexibility and stretchability of a cured film. High Flexibility means that when a printed material on which a cured film of an ink composition is formed is bent, the cured film is not easily broken. High stretchability means that when the cured film is stretched, the cured film is not easily broken.

Examples of the monomer A) include 2-ethylhexyl acrylate (Tg = -85°C), 2-ethylhexylcarbitol acrylate (Tg = -65°C), 2-methoxyethyl acrylate (Tg = -50°C), 2-methoxybutyl acrylate (Tg = -56°C), 4-hydroxybutyl acrylate (Tg = -80°C), diethylene glycol monoethyl ether acrylate (Tg = -70°C), ethoxydiethylene glycol acrylate (Tg = -70°C), isoamyl acrylate (Tg = -45°C), isodecyl acrylate (Tg = -55°C), isooctyl acrylate (Tg = -83°C), isotetradecyl acrylate (Tg = -56°C), caprolactone acrylate (Tg = -53°C), methoxytripropylene glycol acrylate (Tg = -75°C), EO (ethylene oxide)-modified succinic acid acrylate (Tg = -40°C), and tridecyl acrylate (Tg = -75°C). Among them, the monomer A) is preferably any one or more monomers selected from isooctyl acrylate, tridecyl acrylate, and ethoxydiethylene glycol acrylate from the viewpoint of excellent flexibility and adhesion and small curing shrinkage.

The content of the monomer A) is preferably from 2% to 65% by mass inclusive, more preferably from 5 to 50% by mass inclusive, and still more preferably from 10% to 35% by mass inclusive, relative to the total amount of the active-energy-ray-polymerizable monomers. The content of 2% by mass or more is preferable from the viewpoint that when an ink composition is printed on a tire, the ink composition can follow elongation of the tire, and therefore cracking or peeling of the cured product of the ink composition is less likely to take place. The content of 65% by mass or less is preferable from the viewpoint that when the ink composition is irradiated with a predetermined amount of active energy rays, curing of the ink composition proceeds sufficiently.

[Monomer B): polyfunctional monomer having a glass transition point of 0°C or less]

The active-energy-ray-polymerizable polyfunctional monomer includes a monomer B): polyfunctional monomer which has an ethylenically unsaturated double bond and gives a homopolymer having a glass transition point of 0°C or less (hereinafter, also referred to as "monomer B)"). The monomer B) contributes to enhancement of curability and has a low glass transition point, and therefore the monomer B) is well-balanced between "curability" and "flexibility or stretchability". Curability means that the monomer has high crosslinkability due to the polyfunctionality, and can form a cured film with a small irradiation amount of active energy rays. The Tg of 0°C or less is preferable from the viewpoint that when an ink composition is printed on a tire, the ink composition can follow elongation of the tire sufficiently, and therefore the cured product of the ink composition is less likely to crack or peel.

Preferable examples of a bifunctional monomer in the monomer B) include diacrylates of 11 to 32-mole ethylene oxide addition modification products of bisphenol A (hereinafter, referred to as "EO-modified"); polyethylene glycol diacrylates having a number of repetitions n of ethylene glycol of from 7 to 14; and polypropylene glycol diacrylates having a number of repetitions n of propylene glycol of from 7 to 14. More preferable examples include EO-modified (30) bisphenol A diacrylate (Tg = -42°C), which is a 30-mole EO addition modification product, polyethylene glycol diacrylate (n = 9, Tg = -20°C), polyethylene glycol diacrylate (n = 13 or 14, Tg = -34°C), polypropylene glycol diacrylate (n = 7, Tg = -8°C), and polypropylene glycol diacrylate (n = 12, Tg = -32°C).

Examples of a trifunctional monomer in the monomer B) include EO-modified (3) trimethylolpropane triacrylate (Tg = - 40°C), EO-modified (6) trimethylolpropane triacrylate (Tg = - 8°C), EO-modified (9) trimethylolpropane triacrylate (Tg = - 19°C), EO-modified (15) trimethylolpropane triacrylate (Tg = - 32°C), propylene oxide addition modification products (hereinafter, referred to as "PO-modified") (3) trimethylolpropane triacrylate (Tg = -15°C), and PO-modified (6) trimethylolpropane triacrylate (Tg = -15°C).

Among the monomers described above, a bifunctional monomer having a Tg of -30°C or less is preferable, and any one or more monomers selected from polypropylene glycol diacrylate (n = 12, Tg = -32°C), polyethylene glycol diacrylate (n = 13 or 14, Tg = -34°C), and EO-modified (30) bisphenol A diacrylates (Tg = -42°C) are more preferable, from the viewpoint of excellent flexibility and curability of a cured film.

The content of the monomer B) is preferably from 3% to 40% by mass inclusive, more preferably from 5% to 30% by mass inclusive, and particularly preferably from 8% to 20% by mass inclusive, relative to the total amount of the active-energy-ray-polymerizable monomers. With the content of 3% by mass or more, when the ink composition is cured by irradiating the ink composition with active energy rays, curing can be sufficiently achieved with a predetermined irradiation amount of active energy rays. The content of 40% by mass or less is preferable because appropriate viscosity and crosslinkability are obtained, and therefore preferable followability or stretchability is obtained.

By including both the monomer A) and the monomer B), a good balance can be achieved between "flexibility or stretchability" and "curability", and therefore a more preferable surface protection layer composition can be obtained.

### [Monomer C): monofunctional monomer having an alicyclic structure having a glass transition point of from 0°C to 110°C]

The active-energy-ray-polymerizable monofunctional monomer includes a monomer C): a monofunctional monomer which has an alicyclic structure and gives a homopolymer having a glass transition point of from 0°C to 110°C (hereinafter, also referred to as "monomer C)"). By blending a monofunctional monomer having an alicyclic structure with the glass transition point in the above-described range in an appropriate amount, flexibility and film strength of the cured film are enhanced in a well-balanced manner.

Examples of the monomer C) include isobornyl acrylate (Tg = 94°C), 4-t-butylcyclohexyl acrylate (Tg = 34°C), cyclohexyl acrylate (Tg = 15°C), and dicyclopentenyloxyethyl acrylate (Tg = 14°C). Among these compounds, the monomer C is preferably any one or more monomers selected from isobornyl acrylate, 4-t-butylcyclohexyl acrylate, cyclohexyl acrylate, and dicyclopentenyloxyethyl acrylate, from the viewpoint of enhancing the balance between flexibility and film strength.

The content of the monomer C) is preferably from 1% to 70% by mass inclusive, more preferably from 3% to 50% by mass inclusive, and particularly preferably from 5% to 30% by mass inclusive, relative to the total amount of the active-energy-ray-polymerizable monomers, from the viewpoint of being able to appropriately enhance the balance between flexibility and film strength. The content of 1% by mass or more is preferable because the film strength of the cured film can be maintained appropriately. The content of 70% by mass or less is preferable because followability with respect to the base material or flexibility can be maintained appropriately, and therefore the balance between the film strength and flexibility is improved.

By including the monomer C) in addition to the monomer A) and the monomer B), the "coating film strength" is increased. As a result, a cured film satisfying all of "flexibility or stretchability", "curability", and "coating film strength" is obtained.

### [Other monomers]

Another monomer may also be appropriately added in addition to the monomers from A) to C), to the extent that the object of the present invention can be achieved. Examples thereof include a monofunctional monomer such as benzyl acrylate (Tg = 6°C), phenoxyethyl acrylate (Tg = -22°C), lauryl acrylate (Tg = -3°C), 2-hydroxyethyl acrylate (Tg = -15°C), stearyl acrylate (Tg = 30°C), dicyclopentenyl acrylate (Tg = 120°C), dicyclopentanyl acrylate (Tg = 120°C), or 1-adamantyl acrylate (Tg = 153°C); and a polyfunctional monomer such as 1,4-butanediol diacrylate (Tg = 45°C), tetraethylene glycol diacrylate (Tg = 23°C), dimethyloltricyclodecane diacrylate (Tg = 187°C), trimethylolpropane triacrylate (Tg = 62°C), or pentaerythritol triacrylate (Tg = 103°C). Various monomers, such as a conventionally known monomer can be added appropriately without being limited to these monomers. The monomer is a concept including a compound also referred to as an oligomer or a prepolymer according to a molecular weight thereof.

Above all, by further including a phenoxy(poly)alkylene glycol (meth)acrylate optionally containing a substituent in a benzene ring, adhesion to a surface protection layer can be improved. By including a phenoxy(poly)alkylene glycol
(meth)acrylate optionally containing a substituent in a benzene ring, having a glass transition point preferably of 0°C or less, more preferably of -20°C or less, followability with respect to expansion and contraction of a base material can be improved while adhesion to the surface protection layer is improved. Details of the action of improving the adhesion by including the phenoxy(poly)alkylene glycol (meth)acrylate optionally containing a substituent in a benzene ring are not clear. However, it is estimated that the adhesion is improved because hydrophilicity of a decorative layer is improved due to a (poly)alkylene glycol chain by including phenoxy(poly)alkylene glycol (meth)acrylate optionally containing a substituent in a benzene ring, and consequently affinity with a hydrophilic group (hydroxy group or the like) of a surface protection layer is improved.

Specific examples of the phenoxy(poly)alkylene glycol (meth)acrylate optionally containing a substituent in a benzene ring include the above-described phenoxyethyl (meth)acrylate, phenoxydietylene glycol (meth)acrylate, phenoxytetraetylene glycol (meth)acrylate, phenoxyhexaetylene glycol (meth)acrylate, and compounds containing a substituent in a benzene ring thereof.

The content of the phenoxy(poly)alkylene glycol (meth)acrylate optionally containing a substituent in a benzene ring is preferably 5% by mass or more, more preferably 10% by mass or more, particularly preferably 20% by mass or more, and preferably 70% by mass or less as an upper limit, in the total amount of the active-energy-ray-polymerizable monomers. The content of 5% by mass or more is preferable due to sufficient adhesion to the surface protection layer. The content of 70% by mass or less is preferable because polymerizability by the active energy rays can be maintained sufficiently.

Examples of the other monomers include polyurethane (meth)acrylate, polyester (meth)acrylate, and polyether (meth)acrylate. Among these acrylates, an active-energy-ray-curable ink composition containing a monomer having a relatively high viscosity may have a high viscosity as a whole ink. Therefore, for example, when the ink is ejected using an inkjet apparatus, ejection may be difficult according to an ejection pressure. Therefore, when these acrylates are included, the content thereof is preferably 10% by mass or less, and more preferably 5% by mass or less, relative to the total amount of the monomers. It is still more preferable if there is no substantial acrylate content. Containing no other monomers substantially means that the content of the other monomers is 1% by mass or less relative to the total amount of the monomers. Here, the monomer is a concept including a compound also referred to as an oligomer or a prepolymer according to a molecular weight thereof.

In the active-energy-ray-curable ink composition of the present invention, the total amount of the monomer A, the monomer B, the monomer C, and the other monomers is preferably 80% by mass or more, more preferably 90% by mass or more, and still more preferably 100% by mass substantially, relative to the total amount of the monomers. Here, 100% by mass substantially means that the total amount of the monomer A, the monomer B, the monomer C, and the other monomers is 99% by mass or more.

### [Active-energy-ray-polymerization initiator]

The active-energy-ray-curable ink composition may contain an active-energy-ray-polymerization initiator, if necessary. The active energy rays may be any light rays such as far-ultraviolet rays, ultraviolet rays, near-ultraviolet rays, and infrared rays; electromagnetic waves such as X-rays and γ-rays; an electron beam, a proton beam, a neutron beam, or the like, as long as the active energy rays are energy rays which can trigger polymerization reaction of a radical, a cation, an anion, or the like. However, curing by irradiation with ultraviolet rays is preferable from the viewpoints of a rate of curing, easy availability of an irradiation apparatus, the price, and the like. The active-energy-ray-polymerization initiator is not particularly limited as long as the initiator accelerates polymerization reaction of a compound having an ethylenically unsaturated double bond in an active-energy-ray-curable ink composition by irradiation with the active energy rays. A conventionally known active-energy-ray-polymerization initiator can be used. Specific examples of the active-energy-ray-polymerization initiator include aromatic ketones, such as thioxanthone; α-aminoalkylphenones; α-hydroxyketones; acylphosphine oxides; aromatic onium salts; organic peroxides; thio compounds; hexaarylbiimidazole compounds; keto oxime ester compounds; borate compounds; azinium compounds; metallocene compounds, active ester compounds, compounds having carbon-halogen bonds; and alkylamine compounds.

In the present invention, it is preferable to use, among these compounds, one or more selected from the group consisting of acylphosphine oxides, α-hydroxyketones, and α-aminoalkylphenones as the active-energy-ray-polymerization initiator from the viewpoint of accelerating polymerization reaction and increasing curability.

Specific examples of the acylphosphine oxides include bis(2,4,6-trimethylbenzoyl)-phenyl-phosphine oxide bis(2,6-dimethoxybenzoyl)-2,4,4-trimethyl-pentylphenylphoshpine oxide and (2,4,6-trimethoxybenzoyl)phosphine oxide.

Specific examples of α-hydroxyketone include 2-hydroxy-1-{4-[4-(2-hydroxy-2-methyl-propionyl)-benzyl]-phenyl}-2-methyl-propan-1-one, 2-hydroxy-4'-hydroxyethoxy-2-methylpropiophenone, 1-hydroxy-cyclohexyl-phenyl-ketone, and oligo{2-hydroxy-2-methyl-1-[4-(1-methylvinyl)phenyl]propanone}.

Specific examples of α-aminoalkylphenone include 2-benzyl-2-dimethylamino-1-(4-morpholinophenyl)-butanone-1,2-dimethylamino-2-[(4-methylphenyl)methyl]-1-[4-(4-morpholinyl)phenyl]-1-butanone.

The amount of the active-energy-ray-polymerization initiator is only required to be an amount capable of appropriately initiating polymerization reaction of an active energy-ray-polymerizable monomer, and is preferably from 1% to 20% by mass inclusive, and more preferably from 3% to 20% by mass inclusive, relative to the total amount of the active-energy-ray-curable ink composition.

### [Dispersant]

The active-energy-ray-curable ink composition preferably contains a dispersant for dispersing the coloring material. Examples of the dispersant include a polymeric dispersant. The main chain of this polymeric dispersant is formed of a polyester-based chain, a polyacrylate-based chain, a polyurethane-based chain, a polyamine-based chain, a polycaprolactone-based chain, or the like. The polymeric dispersant preferably includes a polar group such as an amino group, a carboxyl group, a sulfone group, or a hydroxyl group, or a salt thereof as a side chain.

Preferable examples of the polymeric dispersant include polyester-based dispersants. Specific examples thereof include "SOLSPERSE 33000", "SOLSPERSE 32000", and "SOLSPERSE 24000" manufactured by Lubrizol Japan, Ltd.; "Disperbyk 168" manufactured by BYK Chemie GmbH; and "AJISPER PB821" manufactured by Ajinomoto Fine-Techno Co., Inc.

The content ratio of the polymeric dispersant is preferably, as an active ingredient, from 3 to 100 parts by mass inclusive, and more preferably from 5 to 60 parts by mass inclusive, relative to 100 parts by mass of the coloring material. The content ratio of 3 parts by mass or more is preferable because the polymeric dispersant can disperse the coloring material uniformly, and stability or ejectability of the ink can be maintained. Here, the stability of the ink means stability of the ink properties (for example, viscosity or particle size) obtainable when the ink composition is stored for a long time. The content ratio of 100 parts by mass or less is preferable because curable components, such as polymerizable monomers can be secured sufficiently, and therefore curability can be maintained and flexibility of a cured product can also be maintained.

The content of the polymeric dispersant is preferably, as an active ingredient, from 0.1% to 30% by mass inclusive, and more preferably from 0.5% to 20% by mass inclusive, relative to the total amount of the ink composition. The content of 0.1% by mass or more is preferable because the polymeric dispersant can disperse the coloring material uniformly, and stability or ejectability of the ink can be maintained. The content of 30% by mass or less is preferable because curable components, such as polymerizable monomers can be secured sufficiently, and therefore curability can be maintained and flexibility of a cured product can also be maintained.

### [Surface adjusting agent]

The active-energy-ray-curable ink composition may further include a surface adjusting agent. The surface adjusting agent is not particularly limited. However, specific examples thereof include "BYK-306", "BYK-333", "BYK-371", and "BYK-377" manufactured by BYK Chemie GmbH, which have dimethylpolysiloxane; "TegoRad 2100", "TegoRad 2200N" and "TegoRad 2300" manufactured by Evonik Degussa Japan Co., Ltd.

The content of the surface adjusting agent is preferably 1% by mass or less relative to the total amount of the ink composition. Having wettability means that when printing is performed on a base material, the ink composition spreads while being wet without causing cissing. The content of 1% by mass or less is preferable because high wet tension of the cured product can be maintained, and therefore cissing cannot occur when a surface protection layer is formed on the surface of the cured product.

### [Other additives]

The active-energy-ray-curable ink composition may also include, as other additives, various additives, such as a plasticizer, a polymerization inhibitor, a photostabilizer, and an oxidation inhibitor. A solvent can be added to the extent that the object of the invention is achieved, but most preferably, the ink composition includes no solvent.

### [Cured film of active-energy-ray-curable ink composition]

The thickness of the cured film is preferably from 1µm to 100µm inclusive. The thickness of 1µm or more is more preferable because the color density of the cured film including a coloring material is not lowered, and therefore designability or decorativeness, and properties such as adhesion and stretchability are improved. The thickness of 100µm or less is more preferable because when the ink composition is irradiated with active energy rays, the ink composition can be sufficiently cured in a short time.

Regarding a method for measuring the film thickness of the cured film, an ink composition was coated on a PET film (A4300 manufactured by Toyobo Co., Ltd.) under the same coating conditions as those used for the cured film thus produced, and the thickness of the cured film thus obtained was measured using a micrometer. Measurement was performed at 10 sites for one sample, and the average value of these measured values was designated as an average film thickness. This similarly applies to the surface protection layer and primer described below.

The active-energy-ray-curable ink composition was formed on a rubber base material as a cured film having a thickness of 10µm. The rubber base material had an elastic modulus of 1.0MPa to 1.5MPa at 100% elongation when a test piece of JIS No. 3 was produced and a tensile test was performed according to JIS K6251. The cured film-formed base material having this cured film formed thereon was used as a dumbbell-shaped test piece No.6 (JIS K6251-5) to perform a tensile test according to the method of JIS K7161 at 25°C and at a tensile rate of 100 mm/min. At this time, the minimum elongation ratio when cracking of the cured film occurred was defined as a cured film fracture point elongation (calculated by (length of printed body when cracking of cured film occurred-original length of printed body)/original length of printed body X 100). The cured film fracture point elongation is preferably 100% or more (for example, the elongation at the time of stretching the base material to a length equal to two times the original length is indicated as 100%), more preferably 150% or more, and still more preferably from 150% to 1000% inclusive. By having a cured film fracture point elongation of 150% or more, the cured film can sufficiently follow the elongation of the base material, and even if the base material is subjected to expansion and contraction, cracking or peeling of the cured film formed on the surface thereof can be further suppressed. On the other hand, a cured film having a cured film fracture point elongation of more than 1000% makes it hard to obtain high strength thereof.

### Surface protection layer

In a decorative base material, a pleasant or external appearance of a decorative layer is significantly deteriorated by attachment of dust, dirt, mud, soot, pitch, and the like. When the decorative base material is exposed outdoors, cracks and the like may be generated on the surface of the decorative layer, and gloss is impaired particularly due to oxidation or deterioration caused by ultraviolet rays or the like. Therefore, a surface protection layer is formed on the decorative base material of the present invention. The surface protection layer is not necessarily formed on the surface of the decorative layer, and may be formed directly on the surface of the base material, or may be formed on the surface of a primer layer described below that is formed on the surface of the base material. The surface protection layer is formed as a cured film by being coated and dried on the cured film of the ink composition.

In the present invention, the surface protection layer is a cured film of a surface protection layer composition including a silicone-modified (meth)acrylate resin having a glass transition point (Tg) of 0°C or less. The glass transition point (Tg) of the silicone-modified (meth)acrylate resin is preferably -20°C or less. The glass transition point (Tg) of 0°C or less makes elongation of the cured film excellent particularly at a low temperature, and therefore improves followability. Also under conditions in which a stress is applied repeatedly, the cured film has high followability with respect to the base material. In a case where a decorative layer, which is a cured film of an active-energy-ray-curable ink composition, is formed on the surface of the base material without forming a surface protection layer on the decorative layer, even when the decorative layer has poor elasticity and causes cracks, it is possible to suppress generation of cracks by forming the surface protection layer of the present invention on the decorative layer.

The silicone-modified (meth)acrylate resin means a resin or a resin composition in which a siloxane bond and an acrylic resin coexist. Examples thereof include a copolymer of a silicone modifier (siloxane compound) and an ethylenically unsaturated monomer and an acrylic resin in which a silicone modifier is bonded to a part thereof.

The silicone-modified (meth)acrylate resin is preferably an aqueous emulsion from the viewpoint of reducing VOC, as described below. Examples thereof include a polymer of a (meth)acrylic radical polymerizable monomer and a silicone oligomer. Preferable examples thereof include a polymer obtained by emulsion-polymerizing the (meth)acrylic radical polymerizable monomer and the silicone oligomer using an emulsifier. Specific examples thereof include a silicone-modified acrylic latex described in JP 2010-69645 A and a silicone-modified acrylic emulsion described in JP 2009-290201 A. Commercially available products can be used as these products. Examples thereof include "OP-SA13", "OP-SA79", "OP-SA355", and "OP-SA356" manufactured by DNP Fine Chemicals Co., Ltd. These products may be used singly or in a mixture of two or more kinds thereof.

The silicone-modified (meth)acrylate resin in the surface protection layer composition is preferably a silicone-modified (meth)acrylic emulsion existing as particles in an aqueous acrylic emulsion. The dispersed particle size of the emulsion is preferably 500 nm or less, and more preferably 200 nm or less. The dispersed particle size of 500 nm or less is preferable because excessive adhesion can be maintained.

The amount of a non-volatile component in the emulsion is preferably from 10% to 80% by mass inclusive, and more preferably from 20% to 60% by mass inclusive. The amount of 10% by mass or more is preferable in view of excellent productivity because drying time is not excessively long for forming a protection layer. The amount of 80% by mass or less is preferable because coatability of coating the surface protection layer composition on a tire is improved.

The surface protection layer composition further includes a carbonate-modified urethane resin. The Tg of the carbonate-modified urethane resin is preferably -20°C or less. The carbonate-modified urethane resin does not particularly deteriorate water resistance and improves damage resistance. In addition, the carbonate-modified urethane resin having a Tg of -20°C or less makes it harder to deteriorate flexibility at a low temperature.

The carbonate-modified urethane resin is at least a polyurethane obtained by reacting polyisocyanate and polyol. Furthermore, the carbonate-modified urethane resin is a polyurethane resin having a polycarbonate structure, that is, a carbonate group (-O-CO-O-) at least in a part of the molecule.

As a raw material of the polyurethane resin, it is possible to use polyol and polyisocyanate, and components selected from a catalyst, a chain extender, a crosslinking agent, water, a foam stabilizer, and the like, as required. As the polyol, for example, a polycarbonate polyol including a hydroxy group at a molecular terminal is only required to be used at least as a part. Examples of the polycarbonate polyol include polyhexamethylene carbonate diol, polyhexamethylene poly-3-methylpentane carbonate diol, polytetramethylene carbonate diol, poly-1,4-cyclohexanedimethylene carbonate diol, and poly(hexamethylene-1,4-cyclohexanedimethylene carbonate) diol.

The polyisocyanate is not particularly limited, and an aromatic, aliphatic, or alicyclic polyisocyanate can be used. Examples thereof include tolylene diisocyanate, xylylene diisocyanate, diphenylmethane diisocyanate, naphthalene diisocyanate, hexamethylene diisocyanate, and isophorone diisocyanate. A conventionally known catalyst, chain extender, crosslinking agent, foam stabilizer, and the like can be used without any particular limitation.

The carbonate-modified urethane resin may be in a form of being dispersed in water or in a form of emulsion. For example, an aqueous polyurethane resin or an aqueous polyurethane resin composition described in JP 2013-87122 A can be preferably used.

Specific examples of the carbonate-modified urethane resin having a Tg of -20°C or less include a commercially available product, such as "OP-U354" manufactured by DNP Fine Chemicals Co., Ltd. These products may be used singly or in a mixture of two or more kinds thereof.

The content of the carbonate-modified urethane resin is preferably from 5% to 90% by mass inclusive in the surface protection layer composition. The content of 5% by mass or more is preferable due to improving damage resistance. The content of 90% by mass or less is preferable because adhesion to the decorative layer can be maintained.

The mass ratio of silicone-modified (meth)acrylate resin/carbonate-modified urethane resin is from 95/5 to 1/9, preferably 9/1 to 3/7, and most preferably 8/2 to 4/6. The mass ratio of 1/9 or less is preferable due to further improving damage resistance.

The surface protection layer composition preferably includes a hydrazide. By a dehydration condensation reaction between a carbonyl group included in the silicone-modified (meth)acrylate resin and the decorative layer and a hydrazide group of a hydrazine, crosslinking between emulsion particles and crosslinking between emulsion particles and the decorative layer occur, and adhesion is improved. Therefore, addition of the hydrazide particularly improves adhesion to the base material and the decorative layer.

Examples of the hydrazide include adipic acid dihydrazide, sebacic acid dihydrazide, and dodecanediohydrazide. These hydrazides may be used singly or in a mixture of two or more kinds thereof.

The content of the hydrazide is preferably from 0.1% to 5% by mass inclusive in the ink composition. The content of 0.1% by mass or more is preferable due to improving adhesion to a tire and the decorative layer. The content of 5% by mass or less is preferable because the hydrazide can be easily dissolved in the ink.

The thickness of the cured film of the surface protection layer composition is preferably from 1µm to 100µm inclusive. The thickness of 1µm or more is preferable because the decorative layer can be protected properly. The thickness of 100µm or less is preferable in view of productivity because drying time is not excessively long for forming a protection layer.

### Primer layer

A primer layer may be formed between the surface of the base material and the decorative layer in order to enhance adhesion between the surface of the base material and the decorative layer.

Examples of a primer composition to configure the primer layer include the silicone-modified (meth)acrylic emulsion and a resin composition including a chlorinated polyolefin or the like. A primer composition including a silicone-modified (meth)acrylic emulsion having a Tg of 50°C or less is preferable in view of adhesion and followability with respect to the base material, adhesion to the active-energy-ray-curable ink composition, flexibility, and the like. A curing agent may be added to the primer composition in order to enhance adhesion.

The amount of a non-volatile component in the silicone-modified (meth)acrylic emulsion of the primer composition is preferably from 10% to 80% by mass inclusive, and more preferably from 20% to 60% by mass inclusive. The amount of 10% by mass or more is preferable in view of excellent productivity because drying time is not excessively long for forming the primer layer. The amount of 80% by mass or less is preferable in view of improving coatability of the primer composition.

Examples of the curing agent include polyisocyanate. The content of the curing agent is preferably from 1 to 50 parts by mass inclusive relative to 100 parts by mass of a primer agent. The content of 1 part by mass or more is preferable in view of significantly enhancing adhesion even when the curing agent is added. The content of 50 parts by mass or less is preferable because followability with respect to the base material is improved.

In the present invention, the base material is often colored. Therefore, the primer composition preferably includes a masking pigment, such as a white pigment, such as titanium oxide, an aluminum paste, or a pearl pigment in order to enhance designability or color developability of the decorative layer. Particularly, a primer composition containing titanium oxide is preferable in order to enhance designability or color developability.

When the primer agent includes titanium oxide, the content of titanium oxide is preferably from 1 to 50 parts by mass inclusive relative to 100 parts by mass of the primer agent. The content of 1 part by mass or more significantly enhances designability or color developability after printing. The content of 50 parts by mass or less enhances followability of the cured film or the like.

The thickness of the primer layer is preferably from 1µm to 100µm inclusive. The thickness of 1 µm or more is preferable because when a primer layer is provided, adhesion between the surface of the base material and the decorative layer is significantly enhanced, and in the case of a primer layer including a masking pigment, designability or color developability of the decorative layer after printing is significantly enhanced. The thickness of 100 µm or less is preferable in view of productivity because drying time for curing the primer agent is short.

Examples of commercially available products of the primer agent include PR-12 and PR-13 (manufactured by DNP Fine Chemicals Co., Ltd.), including titanium oxide and a silicone-modified (meth)acrylic emulsion.

### Method for producing decorative body

In producing the decorative body of the present invention, first, an active-energy-ray-curable ink composition is formed on a base material by a conventionally known method, such as printing, and then the active-energy-ray-curable ink composition is cured by active energy rays to form the decorative layer.

The decorative layer may be printed by any method, such as an inkjet method, a spray method, or a brush coating method. However, the inkjet method is preferable in view of enhancing a degree of freedom of decorating.

The active energy rays are preferably light having a wavelength region of from 200nm to 450nm, and more preferably light having a wavelength region of from 250nm to 430 nm. A light source is not particularly limited. Examples thereof include a high pressure mercury lamp, a metal halide lamp, a low pressure mercury lamp, an ultrahigh pressure mercury lamp, an ultraviolet laser, solar light, and an LED lamp. By irradiating the ink composition with active energy rays using these light sources so that the cumulative amount of light is 100 mJ/cm² or more, and preferably 200 mJ/cm² or more, the ink composition can be instantaneously cured.

A primer layer is formed on a base material in advance, if necessary. In this case, a decorative layer is formed on the primer layer.

Subsequently, a surface protection layer is formed on the decorative layer. When the surface protection layer is formed, any method that can uniformly coat the composition may be used. Examples thereof include spray coating; coating using a towel, a sponge, nonwoven fabric, tissue paper, or the like; dispenser, brush coating, gravure printing, flexographic printing, silk screen printing, inkjetting, and a thermal transfer method.

When the surface protection layer composition is the silicone-modified (meth)acrylic emulsion, in a step forming a surface protection layer to coat and dry the emulsion, a drying temperature is preferably 30°C or more, and more preferably 40°C or more. A cured film having excellent adhesion to the decorative layer can be thereby obtained.

### Ink set

An ink composition for forming the decorative layer, preferably an active-energy-ray-curable ink composition, and a surface protection layer composition for forming the surface protection layer are an ink for a decorative layer and an ink for a surface protection layer, respectively. An ink set of these two is also one aspect of the present invention. This ink set is used for being formed on an elastomer base material or a base material having a Young's modulus of from 0.001 MPa to 30 MPa inclusive. These two of the ink set may be packed together or separately. An embodiment in which a set of these two is used as the decorative body of the present invention is within the range of the present invention. This embodiment includes an ink set having an indication that the ink set can be used as the decorative body of the present invention.

### EXAMPLES

Hereinafter, the present invention will be described in more detail by way of Examples, but the present invention is not limited in any way by these descriptions.

### [Preparation of active-energy-ray-curable ink composition including a coloring material]

Ink compositions of an ink A, an ink B, and an ink C were prepared at the ratios (parts by mass) indicated in Table 1. SOLSPERSE 33000 manufactured by Lubrizol Japan, Ltd. was used as a polymer dispersant.

**[Table 1]**

| | | | Tg (°C) | Ink A | Ink B | Ink C |
|---|---|---|---|---|---|---|
| Pigment | | Titanium dioxide | | 12.0 | 12.0 | 12.0 |
| Monofunctional monomer | Monomer A | Isooctyl acrylate | -54 | | 25.28 | 30.28 |
| | | Ethoxydiethylene glycol acrylate | -70 | 25.5 | | |
| | Monomer C | Cyclohexyl acrylate | 16 | | 29.5 | 29.5 |
| Bifunctional monomer | Monomer B | Dicyclopentenyloxyethyl acrylate | 10∼15 | 15.0 | | |
| | | Polypropylene glycol diacrylate (n = 12) | -32 | | 15.0 | 15.0 |
| | | Polyethylene glycol diacrylate (n = 13 ∼ 14) | -34 | 10.0 | | |
| Other monomers | | Phenoxyethyl acrylate | -22 | 24.28 | 5.0 | |
| Photoinitiator | | 2,4,6-trimethylbenzoyldiphenyl phosphine oxide | | 10.0 | 10.0 | 10.0 |
| | | 1-hydroxycyclohexylphenyl ketone | | 2.0 | 2.0 | 2.0 |
| Dispersant | | Polymeric dispersant | | 1.0 | 1.0 | 1.0 |
| Additive | | Silicon polyether acrylate | | 0.2 | 0.2 | 0.2 |
| Polymerization inhibitor | | Phenothiazine | | 0.02 | 0.02 | 0.02 |
| | | | | 100.00 | 100.00 | 100.00 |

### [Preparation of surface protection layer composition]

A surface protection layer was prepared at the ratios (parts by mass) indicated in Table 2 (the particle size in Table 2 indicates an emulsion particle size of a silicone-modified acrylic emulsion).

### [Production of decorative body]

In order to perform table evaluation, a printed body was produced using, as a base material, a rubber base material having an elastic modulus of 1.2MPa at 100% elongation when a test piece of JIS No.3 was produced and a tensile test was performed according to JIS K6251. A composition to configure the decorative layer indicated in Table 1 was printed on the surface of the rubber base material by an inkjet method under the conditions of a resolution of 720dpi so that the average film thickness was 40µm. The ink composition was cured using a SubZero system (UV lamp system, manufactured by Integration Technology, Ltd., D valve, power output: 100 W/cm), under the conditions of a cumulative amount of light of 640mJ/cm², a peak illuminance of 640mW/cm², and a rate of conveyance of 18m/min. Measurement of the cumulative amount of light and the peak illuminance was performed using an ultraviolet actinometer, UV-351 (manufactured by Orc Manufacturing Co., Ltd.). The decorative layer was thereby produced.

Subsequently, the composition (emulsion) to configure the surface protection layer indicated in Table 2 was coated on the surface of the decorative layer using a bar coater so that the average film thickness after being dried was the average film thickness indicated in Tables3 and Tables4 (10µm). Then, the composition was dried at drying temperatures indicated in Tables3 and Tables4 to obtain the surface protection layer and decorative base materials in Examples and Comparative Examples.

### [Evaluation of adhesion]

Evaluation of adhesion was performed as follows. That is, a cellophane adhesive tape was attached to the surface protection layer after being cured, the surface protection layer and the cellophane adhesive tape were caused to adhere to each other sufficiently, and then the cellophane adhesive tape was peeled off at 90°. At this time, adhesion was determined from an extent of adhesion of the surface protection layer to the base material. Evaluation was performed on the rubber base material and on the decorative layer, separately. The results are indicated in Tables 1 and Tables2. In the following evaluation items, a five-grade evaluation of A to E was performed for indicating superiority to inferiority.

### Evaluation of damage resistance

Evaluation of damage resistance was performed by evaluating external appearance when a sample was rubbed 100 times in a reciprocating manner with a polybrush. The results are indicated in Tables3 and Tables4.

### [Evaluation of water resistance

In evaluating water resistance, a peeling state of a coated film was evaluated by immersing a sample body in tap water at room temperature for one week, and by performing a 90° bending test while the sample body obtained was still wet. The results are indicated in Tables3 and Tables4.

### [Evaluation of weather resistance]

Weather resistance was evaluated by performing a test of a sample body according to JIS K7350-2 and observing the change in external appearance after the sample body was exposed to a xenon arc weatherometer for 100h. The results are indicated in Tables3 and Tables4.

### [Evaluation of fracture elongation]

A cured film having a thickness of 10µm was formed on a rubber base material having an elastic modulus of 1.0MPa to 1.5MPa at 100% elongation when a test piece of JIS No.3 was produced and a tensile test was performed according to JIS K6251. The cured film-formed base material having this cured film formed thereon was used as dumbbell-shaped test piece No.6 (JIS K6251-5) to perform a tensile test according to the method of JIS K7161 at 25°C and at a tensile rate of 100mm/min. At this time, an elongation ratio when cracking of the cured film of the decorative layer or the surface protection layer occurred was defined as fracture elongation (%) of a cured film. The results are indicated in Tables3 and Tables4.

**[Table2]**

| | Tg (°C) | Protection layer ink 1 | Protection layer ink 2 | Protection layer ink 3 | Protection layer ink 4 | Protection layer ink 5 | Protection layer ink 6 | Protection layer ink 7 |
|---|---|---|---|---|---|---|---|---|
| Silicone-modified acrylate 1 | -1 | 90 | | | | 100 | | |
| Silicone-modified acrylate 2 | -25 | | 50 | 49.75 | | | | |
| Silicone-modified acrylate 3 | -25 | | | | 50 | | | |
| Silicone-modified acrylate 4 | 35 | | | | | | 90 | |
| Carbonate-modified urethane | -30 | 10 | 50 | 49.75 | 50 | | 10 | 100 |
| Crosslinking agent (ADH) | | | | 0.5 | | | | |

**[Table3]**

| | Example 1 | Example 2 | Example 3 | Example 4 | Example 5 | Example 6 | Example 7 |
|---|---|---|---|---|---|---|---|
| Protection layer | Protection layer ink 1 | Protection layer ink 2 | Protection layer ink 3 | Protection layer ink 4 | Protection layer ink 2 | Protection layer ink 1 | Protection layer ink 1 |
| Decorative layer | Ink A | Ink A | Ink A | Ink A | Ink A | Ink B | Ink C |
| Drying (°C) | 50 | 50 | 50 | 50 | 25 | 50 | 50 |
| Particle size (nm) | 400 | 400 | 400 | 150 | 400 | 400 | 400 |
| Film thickness (µm) | 10 | 10 | 10 | 10 | 10 | 10 | 10 |
| Adhesion | B | B | A | A | D | B | D |
| Damage resistance | B | A | A | A | A | B | D |
| Water resistance | B | B | B | B | B | B | B |
| Weather resistance | B | B | B | B | B | B | B |
| Fracture elongation | >150% | >150% | >150% | >150% | >150% | >150% | >150% |

**[Table4]**

| | Comparative Example 1 | Comparative Example 2 | Comparative Example 3 |
|---|---|---|---|
| Protection layer | Protection layer ink 5 | Protection layer ink 6 | Protection layer ink 7 |
| Decorative layer | Ink A | Ink A | Ink A |
| Drying(°C) | 50 | 50 | 50 |
| Particle size (nm) | 400 | 400 | - |
| Film thickness (µm) | 10 | 10 | 10 |
| Adhesion | B | B | E |
| Damage resistance | E | E | E |
| Water resistance | B | B | B |
| Weather resistance | B | B | B |
| Fracture elongation | >150% | <10% | >150% |

silicone-modified acrylic emulsion 1: (manufacturer: DNP Fine Chemicals Co., Ltd., trade name: OP-SA13, Tg: -1°C, resin component: 40%)
silicone-modified acrylic emulsion 2: (manufacturer: DNP Fine Chemicals Co., Ltd., trade name: OP-SA355, Tg: -25°C, resin component: 40%)
silicone-modified acrylic emulsion 3: (manufacturer: DNP Fine Chemicals Co., Ltd., trade name: OP-SA356, Tg: -25°C, resin component: 40%)
silicone-modified acrylic emulsion 4: (manufacturer: DNP Fine Chemicals Co., Ltd., trade name: OP-SA55, Tg: 35°C, resin component: 40%)
silicone oil: (manufacturer: WILLSON Co., Ltd., trade name: black coating)
carbonate-modified urethane emulsion (manufacturer: DNP Fine Chemicals Co., Ltd., trade name: OP-U354, Tg: -30°C, resin component: 35%)
ADH: adipic acid dihydrazide

The results in Tables3 and Tables4 indicate that the decorative body using the surface protection layer composition of the present invention has an evaluation of B or higher in any of adhesion, damage resistance, water resistance, and weather resistance, and an evaluation of A particularly in damage resistance. In addition, the fracture elongation of the cured film was as high as 150% or more. It can be understood that the cured film had excellent followability.

## Claims

1. A surface protection layer composition to configure a surface protection layer for protecting an elastomer base material or a base material having a Young's modulus of 0.001MPa to 30 MPa inclusive, and a surface of a decorative layer which is a cured film of an ink composition formed on the base material, the surface protection layer composition comprising:
a silicone-modified (meth)acrylate resin having a glass transition point (Tg) of 0°C or less; and a carbonate-modified urethane resin.

2. The surface protection layer composition according to claim 1, wherein the ink composition is an active-energy-ray-curable ink composition.

3. The surface protection layer composition according to claim 1 or 2, wherein a mass ratio of the silicone-modified (meth)acrylate resin/the carbonate-modified urethane resin is from 95/5 to 1/9.

4. The surface protection layer composition according to any one of claims 1 to 3, wherein the glass transition point (Tg) of the silicone-modified (meth)acrylate resin is -20°C or less.

5. The surface protection layer composition according to any one of claims 1 to 4, comprising the carbonate-modified urethane resin having a Tg of -20°C or less.

6. The surface protection layer composition according to any one of claims 1 to 5, wherein the surface protection layer further includes a hydrazide.

7. The surface protection layer composition according to any one of claims 1 to 6, wherein the surface protection layer composition is an aqueous emulsion and an average particle size of the silicone-modified (meth)acrylate resin is 500nm or less.

8. A decorative body comprising:
an elastomer base material or a base material having a Young's modulus of 0.001MPa to 30MPa inclusive;
a decorative layer which is a cured film of an ink composition formed on the base material; and
a surface protection layer formed on the decorative layer, wherein
the surface protection layer is a cured film of the surface protection layer composition according to any one of claims 1 to 7.

9. The decorative body according to claim 8, wherein the ink composition includes phenoxy(poly)alkylene glycol (meth)acrylate optionally containing a substituent in a benzene ring.

10. An ink set of an ink for a decorative layer and an ink for a surface protection layer for forming a decorative layer and a surface protection layer on an elastomer base material or a base material having a Young's modulus of 0.001MPa to 30MPa inclusive, wherein
the ink for a decorative layer is an ink composition, and the ink for a surface protection layer is the surface protection layer composition according to any one of claims 1 to 7.
